# EUROPÄISCHE PATENTSCHRIFT

(11) **EP 2 918 197 B1**
(45) Veröffentlichungstag und Bekanntmachung des Hinweises auf die Patenterteilung: **28.12.2022**
(21) Anmeldenummer: 15157119.7
(22) Anmeldetag: 02.03.2015
(51) Int. Cl.: A47J 31/06, A47J 31/44

(54) **Siebträgeranordnung, Siebträger-Kaffeemaschine und Ableiteinsatz**
Filter holder assembly, filter holder coffee machine and discharge insert
Système de porte-filtre, machine à café dotée de porte-filtre et insert d'évacuation

(30) Priorität: 11.03.2014 DE 102014204487
(43) Veröffentlichungstag der Anmeldung: 16.09.2015
(73) Patentinhaber: WMF GmbH, 73312 Geislingen/Steige (DE)
(72) Erfinder: Göltenboth, Frank, 89134 Blaustein (DE)
(74) Vertreter: Pfenning, Meinig & Partner mbB

(56) Entgegenhaltungen:
- DE-T2- 69 103 309
- US-A- 4 644 856
- US-A1- 2008 115 675
- US-A1- 2009 266 238

## Beschreibung

Die vorliegende Erfindung bezieht sich auf eine Siebträgeranordnung gemäß des Oberbegriffs des Anspruchs 1, auf eine Siebträger-Kaffeemaschine mit einer dergestaltigen Siebträgeranordnung sowie auf einen Ableiteinsatz, der zum Einsetzen in den Siebträger einer solchen Siebträger-Kaffeemaschine ausgebildet ist.

Die Temperatur, bei der Kaffee gebrüht wird, hat, neben den verwendeten Kaffeebohnen und der Mahlung, einen starken Einfluss auf die Qualität des aufgebrühten Kaffees. Bei Siebträgermaschinen ist hier besonders die erste Tasse nach dem Einschalten der Maschine oder nach längeren Pausen, in denen kein Getränk bezogen wurde, kritisch. Der Siebträger ist in der Regel sehr massiv und aus Metall (beispielsweise: Messing-verchromt) hergestellt. Daher kühlt in solchen Pausen der Siebträger auf Raumtemperatur herunter und wird durch das Brühwasser (mit einer Temperatur zwischen etwa 90°C und 98°C) erwärmt. Die Energie, die den Siebträger erwärmt, steht jedoch nicht mehr für die Erhitzung des aufgebrühten Kaffees zur Verfügung, was zu einem großen Temperaturverlust bei der Brühung und der Ausgabetemperatur des Kaffees führt (zum Brühen für Espresso werden nur etwa 30 bis 40 ml Heißwasser benötigt).

Aus dem Stand der Technik sind aufwendige Beheizungen für Brühköpfe bekannt, um Temperaturverluste bis zum Siebträger zu verhindern und um mit ausreichender Brühwassertemperatur zu brühen. Darüber hinaus werden vor jeder Brühung die Siebträger durch den Benutzer manuell mit Heißwasser ausgespült, um die Siebträger vorzuwärmen.

Demgemäß ist aber ein zeitaufwendiges manuelles Spülen zur Erwärmung der Siebträger vonnöten. Zudem wird Energie durch Heißwasserverbrauch verschwendet. Wird das Spülen vergessen, erfolgt die Brühung mit zu kaltem Brühwasser, was zu Qualitätsverlusten bei Geschmack und Crema des aufgebrühten Kaffees führt.

Insbesondere beschreibt die DE 691 03 309 T2 einen Brühkopf für eine Kaffeemaschine, umfassend einen Becher und einen Filter, wobei dieser Becher mit einem herausnehmbaren, aus einem die Wärmeschlecht leitenden Material hergestellten Hohlkörper ausgestattet ist, welcher unterhalb des Filters angeordnet ist und durch den das Getränk, welches aus dem Filter heraus läuft, bis zum Ausgang des Bechers des Brühkopfes ohne Berührung dieses letzeren hindurchtreten muss, dadurch gekennzeichnet, dass dieser Hohlkörper aus einem Sockel und einer oberen Platte gebildet ist, welche mittels einer Ringdichtung zusammengehalten werden, die auch die Wasserdichtheit zwischen dem Filter und dem Becher des Brühkopfes gewährleistet.

Die US 2009/266238 A1 beschreibt einen Filterhalter für Espressokaffeemaschinen, umfassend einen becherförmigen Körper, der eine im Wesentlichen zylindrische Form in Bezug auf eine Achse hat, wobei der Körper offen ist in einem oberen Bereich zur Montage an einer Espresso-Kaffeemaschine mit einer Öffnung an seinem Boden, der auf der Achse des Körpers für den Durchgang eines extrahierten Getränks angeordnet ist, einen Adapter, der in dem becherförmigen Körper angebracht ist und im wesentlichen zylindrisch ist. Der Adapter ist in der Lage koaxial drehbar mit dem becherförmigen Körper. Der Adapter weist axiale Sperrmittel zum Fixieren des Adapters mit dem becherförmigen Körper auf, um eine axiale Bewegung zu verhindern.

Aufgabe der vorliegenden Erfindung ist es somit, eine Siebträgeranordnung und eine diese verwendende Siebträger-Kaffeemaschine zur Verfügung zu stellen, mit denen Wärmeverluste auf einfache Weise zuverlässig minimiert werden können. Aufgabe ist es darüber hinaus, die Nachteile des Standes der Technik zu vermeiden, also insbesondere ohne zusätzliche Heizeinrichtungen und ohne Spülvorgänge auszukommen.

Diese Aufgaben werden durch eine Siebträgeranordnung gemäß Anspruch 1, eine Siebträger-Kaffeemaschine gemäß Anspruch 6 sowie einen Ableiteinsatz gemäß Anspruch 7 gelöst. Vorteilhafte Ausführungsformen lassen sich jeweils den abhängigen Ansprüchen entnehmen.

Nachfolgend wird die vorliegende Erfindung zunächst allgemein, dann anhand eines detaillierten Ausführungsbeispiels beschrieben.

Eine erfindungsgemäße Siebträgeranordnung ist in Anspruch 1 beschrieben.

Eine solche Siebträgeranordnung ist zum Einsatz in einer erfindungsgemäßen Siebträger-Kaffeemaschine gemäß Anspruch 6 ausgebildet. Eine solche Siebträger-Kaffeemaschine wird alternativ auch als Halbautomat bezeichnet. Der grundlegende Aufbau eines solchen Kaffeemaschinentyps ist dem Fachmann bekannt, siehe beispielsweise die EP 2 314 188 A1 für eine mehrere einzelne Siebträger bzw. Siebträgeranordnungen umfassende Siebträgermaschine. Erfindungsgemäß wird unter dem Siebträger der Siebträgeranordnung derjenige Teil der Siebträger-Kaffeemaschine (also des Halbautomaten oder auch der Espressomaschine) verstanden, in welchen der Siebeinsatz der Siebträgeranordnung eingesetzt werden kann, welcher also den Siebeinsatz bzw. das Brühsieb trägt. In der Regel wird der Siebträger mit eingesetztem Siebeinsatz mit einer Vierteldrehung über einen Bajonettverschluss an der Brühgruppe der Siebträger-Kaffeemaschine befestigt, nach dem Brühen des Kaffees wieder entnommen und zum Auswurf des Kaffeepucks mechanisch gegen z.B. eine Abklopfkiste geschlagen. Der Siebeinsatz weist in der Regel in seinem Boden eine Vielzahl einzelner Löcher auf, die so dimensioniert sind, dass das im Siebeinsatz befindliche Kaffeemehl vom Kaffeewasser (bzw. vom aufgebrühten Kaffee) durchströmt werden kann (und das Kaffeewasser anschließend durch die Löcher bzw. Öffnungen abfließen kann), wobei aber die einzelnen Kaffeemehlkörner zurückgehalten werden. Diese grundlegende Vorgehensweise und der entsprechende Aufbau der Maschine sind dem Fachmann bekannt. Sie werden daher im Rahmen der nachfolgenden Erfindung nicht näher beschrieben.

Unter einem thermisch isolierenden Material wird im Rahmen der vorliegenden Erfindung ein Material verstanden, dass mindestens eine, bevorzugt alle beide der folgenden Eigenschaften aufweist:
1. Es minimiert die Wärmeleitfähigkeit. Der Gegenstand aus diesem Material (insbesondere der Ableiteinsatz, aber z.B. auch der Verteiler, siehe nachfolgend) hat also eine möglichst geringe Wärmeleitfähigkeit, leitet also Wärme möglichst schlecht.
2. Es minimiert die Wärmeaufnahme bzw. die Wärmekapazität. Der Gegenstand aus diesem Material (z.B. der Abfeiteinsatz) nimmt also möglichst wenig Wärme auf, ist also so ausgebildet, dass seine Wärmekapazität minimal ist. (Somit sollte sowohl die Masse dieses Gegenstands als auch die spezifische Wärmekapazität dieses Gegenstands minimiert sein, also möglichst klein sein.)

Das Material ist also insbesondere so beschaffen, dass am über den Ableiteinsatz (und den Verteiler) abgeleiteten, aufgebrühten Kaffeewasser ein möglichst geringer Temperaturverlust auftritt.

Vorteilhafterweise weist der Ableiteinsatz (bzw. das Material desselben) die folgenden Eigenschaften auf:
- Der Ableiteinsatz kann aus Kunststoff, insbesondere aus einem thermoplastischen Polymer mit Zulassung für den Kontakt mit Kaffee (Lebensmittelzulassung) wie z.B. POM. PBT, PVDF,PSU, PPS, PC, PET, PTFE, und/oder mit einer bevorzugten mittleren Wanddicke von < 2.5 mm, bevorzugt < 1.0 mm (z.B. von 0.8 mm) ausgebildet werden.
- Grundsätzlich kann der Ableiteinsatz, da in direktem Kontakt mit Kaffee, auch aus einem anderen geschmacksneutralen Material wie Edelstahl, Keramik oder Glas ausgebildet sein.
- Die Masse des Ableiteinsatzes ist erfindungsgemäss < 5 g.
- Die Wärmeleitfähigkeit des Ableiteinsatzes beträgt erfindungsgemäss < 0,3 W/(m^{∗}K).
- Die spezifische Wärmekapazität des Ableiteinsatzes ist erfindungsgemäss 1200 J/(kg^{∗}K).
- Die Wärmekapazität des Ableiteinsatzes ist erfindungsgemäss < 5 J/K.

Mit dem "austretenden Kaffee" ist erfindungsgemäß der (in der Regel heiß) aufgebrühte Kaffee gemeint.

Vorteilhafterweise realisierbare Merkmale beschreibt Anspruch 2.

Der Ableiteinsatz ist somit bevorzugt in den untenliegenden Innenraumbereich des Siebträgers, also in seinen Auslaufbereich, einsetzbar.

Weitere vorteilhafterweise realisierbare Merkmale beschreibt der abhängige Anspruch 3.

Gemäß der Ansprüche 2 und 3 kann der Ableiteinsatz somit so ausgeformt sein, dass er in das Innere des Siebträgers, dort insbesondere in den Bodenbereich des Siebträgers und den Auslaufbereich des Siebträgers (bzw. die dem Innenraum des Siebträgers zugewandte Innenwandung des Auslaufbereiches) bedeckend, einsetzbar ist, vorzugsweise formschlüssig einsetzbar ist. Der Ableiteinsatz kann also so geformt sein und positioniert werden, dass der heiß gebrühte Kaffee den Siebeinsatz durch dessen Öffnungen verlässt, unmittelbar auf den darunterliegend angeordneten Ableiteinsatz trifft und von letzterem aus dem Innenraum des Siebträgers abgeleitet wird, ohne dass der heiß gebrühte Kaffee Innenwandabschnitte des Siebträgers berühren muss.

Die in der erfindungsgemäßen Siebträger-Kaffeemaschine verwendete Siebträgeranordnung besteht somit aus dem Siebträger selbst mit dem Kaffeeauslauf (Auslaufbereich des Siebträgers) und dem Siebeinsatz, der das Kaffeemehl aufnimmt und am Boden eine Vielzahl von Öffnungen (Lochung) zum Filtern des Kaffees hat. Erfindungsgemäß ist nun vorgesehen, im unteren Bereich des Siebträgers, zwischen Siebträger und Siebeinsatz einen in der Regel dünnwandigen Ableiteinsatz (insbesondere aus Kunststoff) als thermischen Isolator einzubringen.

Gemäß Anspruch 4 kann dieser Ableiteinsatz beispielsweise mit Rippen versehen werden oder auch flächige, punktförmige Erhöhungen tragen, um möglichst kleine Kontaktflächen und damit Wärmeübertragungsflächen zum Siebträger zu haben.

Weitere vorteilhafterweise realisierbare Merkmale lassen sich dem abhängigen Anspruch 5 entnehmen.

Bei besagten Abschnitten besagter Oberfläche des Siebeinsatzes bzw. den diesen gegenüberliegenden Abschnitten der Innenwandung des Siebträgers handelt es sich insbesondere um die oberhalb des Auslaufbereiches des Siebträgers liegenden Oberflächen- bzw, Wandungsabschnitte (also die der Einsetzöffnung für den Siebeinsatz zugewandt liegenden Oberflächen- bzw. Wandungsabschnitte).

Siebeinsatz einerseits und Siebträger andererseits sind vorzugsweise so ausgeformt, dass die Spaltbreite zwischen 0.5 mm und 2 mm liegt. Der Spalt ist mit Luft gefüllt und führt somit zu einer zusätzlichen thermischen Isolation. Ein solcher Spalt ist insbesondere durch Ausformen von Siebeinsatz und Siebträger so, dass im eingesetzten Zustand des Siebeinsatzes ausschließlich eine linienförmige Auflage des geeignet ausgeformten (beispielsweise nach Außen umgebogenen) oberen Randes des Siebeinsatzes auf dem oberen Rand des Siebträgers gegeben ist, herstellbar. Auf Höhe des darunterliegenden, in der Regel zylinderförmigen Seitenwandabschnitts des Siebeinsatzes und des gegenüberliegenden, in der Regel ebenfalls zylinderförmigen Seitenwandabschnittes des Siebträgers kann die äußere Oberfläche des Siebeinsatzes zwar formschlüssig an die Innenwandung des Siebträgers angepasst sein, jedoch so ausgebildet sein, dass der Außendurchmesser des Siebeinsatzes geringfügig kleiner ist als der Innendurchmesser des Siebträgers.

Vorzugsweise ist der Siebeinsatz aus einem dünnen Material (Wandstärke bevorzugt zwischen 0.4 mm und 1 mm) geringer Wärmeleitfähigkeit (beispielsweise Edelstahl) ausgebildet. Die Wärmeleitfähigkeit beträgt dabei vorzugsweise weniger als 30 W/(m^{∗}K), bevorzugt weniger 15 W/(m^{∗}K).

Diese Variante ist besonders vorteilhaft, da mit ihr eine praktisch vollständige thermische Isolierung des heißen Kaffees gegenüber dem Siebträger erfolgt: im oberen Bereich durch den Luftspalt und darunter im Auslaufbereich über den Ableitelnsatz.

Somit kann der Siebeinsatz ausschließlich linienförmig, nämlich mit seinem oberen, überkragenden Rand auf dem Siebträger aufliegen, d.h. nur eine kleine Kontaktfläche zum Siebträger haben (sowie die schlechte Wärmeleitfähigkeit des Edelstahls aufweisen). Der Luftspalt zwischen dem Siebeinsatz und dem Siebträger wirkt als Isolator, da Luft ein sehr schlechter Wärmeleiter ist, ähnlich dem Vakuum bei Isolierkannen. Im unteren Auslaufbereich fließt der Kaffee über den Kunststoffeinsatz (Ableiteinsatz) in die Tasse ab, ohne den metallischen Siebträger zu berühren. Der Kunststoffeinsatz wirkt hier ebenfalls als Wärmeisolator.

Die Wanddicke des Verteilers kann zwischen 0.5 mm und 1.5 mm betragen. Er ist bevorzugt aus Edelstahl ausgebildet, kann aber auch aus Kunststoff ausgebildet sein. Auch kunststoffbeschichteter Edelstahl ist einsetzbar. Beispielsweise kann ein Edelstahlverteiler mit einer spezifischen Wärmekapazität von 500 J/(kg^{∗}K) und einem Gewicht von 10 bis 12 g eingesetzt werden, der eine Wärmekapazität bzw. Wärmeaufnahme von 5 bis 6 J/K hat. Ebenso kann ein Kunststoffverteiler mit einer spezifischen Wärmekapazität von 1200 J/(kg^{∗}K) und einem Gewicht von 3 bis 4 g eingesetzt werden, der eine Wärmekapazität bzw. Wärmeaufnahme von 4 bis 5 J/K aufweist.

Der Verteiler verteilt den aus dem Auslauf des Siebträgers abfließenden Kaffee in der Regel auf zwei Tassen. Es sind jedoch auch Ausführungen, die den Kaffee nur in eine Tasse ableiten, möglich.

Eine erfindungsgemäße Siebträger-Kaffeemaschine sowie ein erfindungsgemäßer Ableiteinsatz sind in den Ansprüchen 6 und 7 beschrieben.

Die vorliegende Erfindung hat gegenüber dem Stand der Technik insbesondere die folgenden Vorteile:
- Mit der erfindungsgemäßen Siebträgeranordnung lassen sich die Temperaturverluste am aufgebrühten Kaffeewasser deutlich reduzieren.
- Hierzu ist lediglich ein geringer apparativer Aufwand durch ein kostengünstiges Kunststoffteil vonnöten.
- Auch die Hygiene und die Möglichkeit zur Reinigung des Siebträgers verbessern sich.
- Ein Kontakt des Kaffeewassers mit dem in der Regel unedlen Metall des Siebträgers wird vermieden, was unter anderem auch zu Geschmacksvorteilen des aufgebrühten Kaffees führt.

Nachfolgend wird die Erfindung beispielhaft beschrieben, dabei zeigen:
Figuren 1 und 2 eine erfindungsgemäße Siebträgeranordnung.
Figur 3 einen erfindungsgemäßen Siebträger ohne dessen Siebeinsatz.
Figur 4 zwei Ansichten eines erfindungsgemäßen Ableiteinsatzes aus Kunststoff.

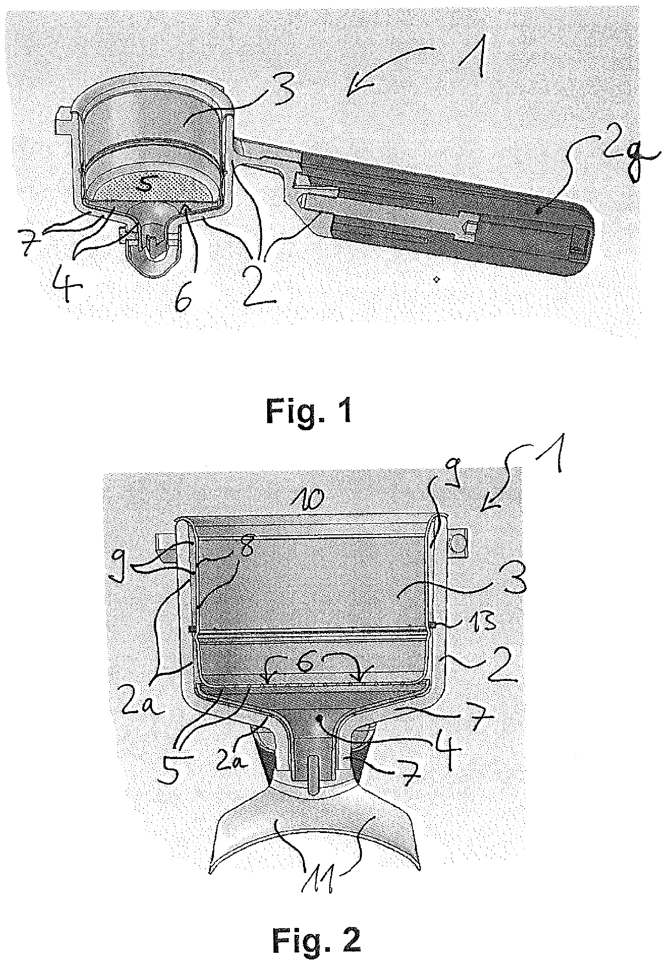

Figur 1 zeigt eine erfindungsgemäße Siebträgeranordnung 1 für eine Siebträger-Kaffeemaschine (nicht gezeigt). Die Anordnung umfasst einen Siebträger 2 (mit dem eigentlichen Siebträgerkorpus, vgl. links im Bild, sowie dem daran angebrachten Siebträgergriff 2g) und einen in den Siebträger 2 (bzw. in den von der Wandung des Siebträgerkorpus umschlossenen Innenraum) einsetzbaren Siebeinsatz 3. Siebträgerkorpus und Siebeinsatz 3 sind im Wesentlichen zylinderförmig ausgebildet und hier im ineinander eingesetzten Zustand gezeigt. Figur 2 zeigt einen vergrößerten Schnitt durch eine durch die Längsachse des Siebträgerkorpus und des Siebeinsatzes 3 verlaufenden Ebene.

Wie Figur 2 zeigt, umfasst die Siebträgeranordnung 1 erfindungsgemäß einen aus Kunststoff ausgebildeten, konisch zulaufenden Ableiteinsatz 4, der ins Innere des Siebträgers 2 einsetzbar ist und dabei formschlüssig an den Verlauf des sich konisch verjüngenden Auslaufbereiches 7 des Siebträgers 2 angepasst ist. Nach dem Einsetzen des Ableiteinsatzes 4 in den Siebträger 2 (gezeigter Zustand) sitzt dieser somit im unteren Bereich, also dem Auslaufbereich 7 des Siebträgers 2. Die Ausformung und Positionierung des Ableiteinsatzes 4 erfolgt dabei so, dass dessen oben liegender Rand geringfügig oberhalb des Bodens 6 (der eine Vielzahl von Filteröffnungen 5 aufweist) des in den Siebträger 2 eingesetzten Siebeinsatzes 3 und diesen Boden 6 außenumfangsseitig umrahmend sitzt.

Der eingesetzte Ableiteinsatz 4 berührt dabei die Innenwandung 2a des Siebträgers 2 im Auslaufbereich 7 des Siebträgers 2 mit seiner Außenwandung. In einer noch weiter verbesserten Ausgestaltungsvariante (hier nicht gezeigt) kann besagte Außenwandung des Ableiteinsatzes 4 mit mehreren hervorstehenden, schmalen Rippen versehen sein, die für eine möglichst geringe Auflagefläche besagter Außenwandung auf der Innenwandung 2a des Siebträgers und somit für eine weiter verbesserte thermische Isolierung des auslaufenden bzw. den Siebträger durchlaufenden Kaffeewassers vom Siebträger bzw. der Wandung desselben sorgen.

Der Ableiteinsatz 4 sitzt somit im Innenvolumen des Siebträgers 2 zwischen dessen unterem Auslaufbereich 7 einerseits und dem Boden 6 des eingesetzten Siebeinsatzes 3 andererseits so, dass der aufgebrühte, durch die Öffnungen 5 des Bodens 6 hindurchtretende Kaffee keinerlei Wandabschnitte 2a des Siebträgers 2 berühren muss, sondern über den sich konisch verjüngenden, über das untere Ende des Auslaufes des Siebträgers 2 hinausragenden Ableiteinsatz 4 direkt auf den am unteren Ende des Siebträgers 2 festgeschraubten Verteiler 11 geführt wird. Der Verteiler 11 ist hier aus einem dünnen Edelstahlblech mit einer Dicke von 0.8 mm und als zweiseitiger Verteiler ausgebildet.

Wie Figur 2 darüber hinaus zeigt, ist der oberhalb des Bodens 6 des Siebeinsatzes 3 ausgebildete, im wesentlichen zylinderförmige Seitenwandbereich des Siebeinsatzes 3 mit dem Verlauf seiner Außenwandung 8 (also der der Innenwandung 2a des Siebträgers 2 zugewandten Oberfläche) formschlüssig an die im wesentlichen ebenfalls zylinderförmig ausgebildete Innenwand 2a des Siebträgers 2 oberhalb des Auslaufbereiches 7 desselben angepasst. Die formschlüssige Anpassung erfolgt dabei jedoch so, dass im korrekt eingesetzten Zustand des Einsatzes 3 zwischen der außenliegenden Oberfläche 8 der oberen Abschnitte des Siebeinsatzes 3 einerseits und den innenliegenden Wandabschnitten 2a des Siebträgers 2 andererseits ein dünner, hier 1 mm breiter Luftspalt 9 entsteht. Am oberen Rand ist die dünne Wandung des Siebeinsatzes 3 nach Außen umgeschlagen, so dass der Einsatz 3 lediglich auf Höhe der obenliegenden, also zum Einsetzen des Siebeinsatzes gedachten Öffnung 10 des Siebträgers 2 den Siebträger 2 bzw. die Wandung 2a desselben berührt. Durch diese lediglich linienförmige Berührung von Siebträger 2 und Siebeinsatz 3 an ihren oberen Rändern, durch das Material des Siebeinsatzes 3 (dünnes Edelstahlblech mit einer Wanddicke von 0.6 mm) und den Luftspalt 9 ist somit in Verbindung mit dem vorbeschriebenen Ableiteinsatz 4 eine optimale thermische Isolierung des den Siebträger 2 durchfließenden Kaffeewassers von der Wandung 2a des Siebträgers gegeben. Die vorbeschriebenen Eigenschaften des Verteilers 11 sorgen dafür, dass auch durch die notwendige Berührung des Kaffeewassers mit dem Verteiler 11 praktisch keine Abkühlung des Kaffeewassers erfolgt.

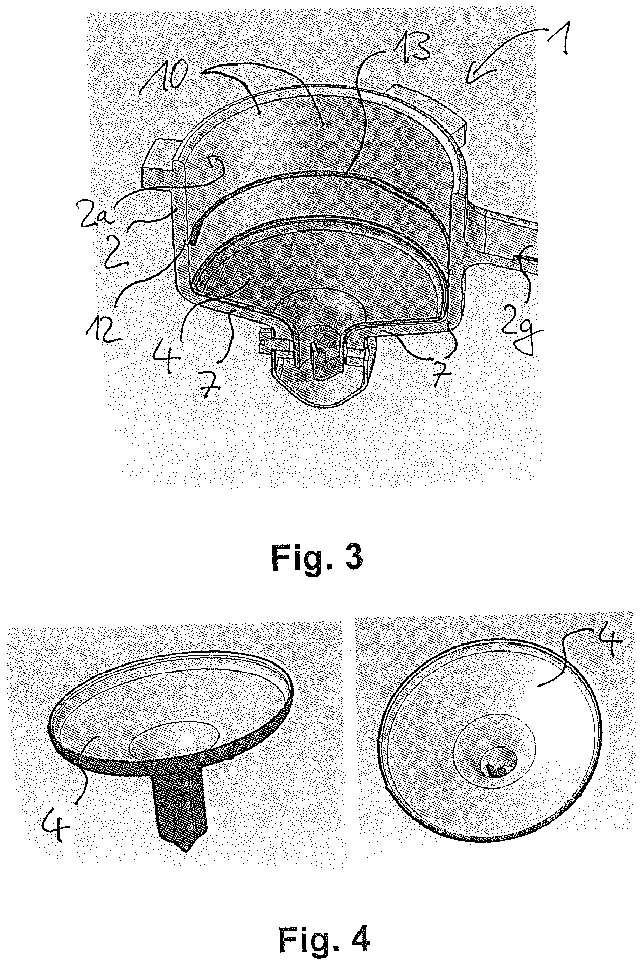

Wie Figur 3 (die die Siebträgeranordnung 1 ohne Siebeinsatz 3 zeigt) darstellt, ist die Innenwandung 2a des Siebträgers 2 zwischen der oberen Öffnung 10 des Siebträgers 2 und dem Auslaufbereich 7 des Siebträgers 2 mit einem umlaufenden Federring 13, der sich in einer umlaufenden Nut 12 befindet, versehen. Dieser Federring (C-Ring) ist als Clipelement ausgebildet, um den Siebeinsatz 3 in Position zu halten und dem Bediener ein taktiles Feedback zu geben, wenn der Siebeinsatz 3 korrekt und vollständig eingesetzt worden ist, sich also in der in Figur 2 gezeigten Position befindet.

Figur 4 zeigt den Kunststoff- bzw. Ableiteinsatz 4 genauer: Dieser ist (bis auf die Stabilisierungsspeichen im unteren Abflussbereich) rotationssymmetrisch ausgebildet, weist im oberen Bereich einen Kaffeewasserauffangteller auf, der sich zum unteren Auslauf des Siebträgers 2 hin zunehmend konisch verjüngt und weist einen aus dem Auslaufbereich 7 des Siebträgers 2 herausragenden Abschnitt (Abflussbereich) geringen Durchmessers auf, mit dem das auslaufende Kaffeewasser zielgenau auf die Mitte des Verteilers 11 geführt werden kann.

## Patentansprüche

1. Siebträgeranordnung (1) für eine Siebträger-Kaffeemaschine mit
einem Siebträger (2) und einem in den Siebträger (2) einsetzbaren Siebeinsatz (3), wobei der Siebträger (2) einen unterhalb seines Auslaufbereichs (7) angeordneten, also einen auf derjenigen Seite, die seiner zum Einsetzen des Siebeinsatzes (3) ausgebildeten Öffnung (10) gegenüberliegt, angeordneten Verteiler (11) aufweist, und
einem Ableiteinsatz (4), der ausgeformt ist und im Siebträger (2) positionierbar ist zum Ableiten des über die Filteröffnungen (5) des Siebeinsatzes (3) austretenden Kaffees aus dem Siebträger (2),
wobei der Ableiteinsatz (4) ein thermisch isolierendes Material enthält oder daraus besteht,
wobei die Wärmeleitfähigkeit des Ableiteinsatzes (4) < 0,3 W/(m^{∗}K) beträgt und die spezifische Wärmekapazität des Ableiteinsatzes (4)< 1200 J/(kg^{∗}K) ist,
**dadurch gekennzeichnet, dass**
der Verteiler (11) ein thermisch isolierendes Material enthält oder daraus besteht, die Masse des Ableiteinsatzes (4) < 5 g ist und die Wärmekapazität des Ableiteinsatzes (4) < 5 J/K ist.

2. Siebträgeranordnung (1) nach dem vorhergehenden Anspruch
***dadurch gekennzeichnet, dass***
der Ableiteinsatz (4) in den Siebträger (2) zwischen der Innenwandung (2a) des Siebträgers (2) einerseits und dem Siebeinsatz (3) andererseits einsetzbar ist, bevorzugt zwischen der Innenwandung (2a) des Auslaufbereichs (7) des Siebträgers (2) einerseits und einem die Filteröffnungen (5) des Siebeinsatzes (3) umfassenden Abschnitt, insbesondere dem Boden (6), des Siebeinsatzes (3) andererseits einsetzbar ist.

3. Siebträgeranordnung (1) nach einem der vorhergehenden Ansprüche ***dadurch gekennzeichnet, dass***
der Ableiteinsatz (4) so ausgeformt und im Siebträger (2) positionierbar ist, dass der über die Filteröffnungen (5) des Siebeinsatzes (3) austretende Kaffee bei in den Siebträger eingesetztem Ableiteinsatz (4) mit letzterem aus dem Siebträger (2) ableitbar ist, ohne dass dieser Kaffee die Innenwandung (2a) des Siebträgers (2) berührt.

4. Siebträgeranordnung (1) nach einem der vorhergehenden Ansprüche ***dadurch gekennzeichnet, dass***
der Ableiteinsatz (4) auf derjenigen seiner Oberflächen, die im in den Siebträger (2) eingesetzten Zustand der Innenwandung (2a) des Auslaufbereichs (7) des Siebträgers (2) zugewandt ist, mit einem oder mehreren Abstandshalter(n), insbesondere mit mehreren rippen- und/oder punktförmigen Erhebungen, versehen ist.

5. Siebträgeranordnung (1) nach einem der vorhergehenden Ansprüche ***dadurch gekennzeichnet, dass***
der Siebeinsatz (3) so ausgeformt und in den Siebträger (2) einsetzbar ist, dass im eingesetzten Zustand zwischen zumindest Abschnitten (8) derjenigen Oberfläche des Siebeinsatzes (3), die der Innenwandung (2a) des Siebträgers (2) zugewandt ist, einerseits und der Innenwandung (2a) des Siebträgers (2) andererseits ein Spalt (9) ausgebildet ist.

6. Siebträger-Kaffeemaschine mit einer Siebträgeranordnung (1) gemäß einem der vorhergehenden Ansprüche.

7. Ableiteinsatz (4) zum Einsetzen in einen Siebträger (2) für eine Siebträger-Kaffeemaschine,
wobei der Ableiteinsatz (4) ausgeformt ist, um im Siebträger (2) positioniert zu werden und um den über die Filteröffnungen (5) eines in den Siebträger (2) eingesetzten Siebeinsatzes (3) austretenden Kaffee aus dem Siebträger (2) abzuleiten,
wobei der Ableiteinsatz (4) ein thermisch isolierendes Material enthält oder daraus besteht, und
wobei die Wärmeleitfähigkeit des Ableiteinsatzes (4) < 0,3 W/(m^{∗}K) beträgt und die spezifische Wärmekapazität des Ableiteinsatzes (4)< 1200 J/(kg^{∗}K) ist,
**dadurch gekennzeichnet, dass**
die Masse des Ableiteinsatzes (4) < 5 g ist und die Wärmekapazität des Ableiteinsatzes (4) < 5 J/K ist.

## Claims

1. A filter holder assembly (1) for a filter holder coffee machine comprising
a filter holder (2) and a filter insert (3) which can be inserted into the filter holder (2), the filter holder (2) having a distributor (11) arranged below its outlet region (7), i.e. arranged on that side which is opposite its opening (10) formed for the insertion of the filter insert (3), and
a diverter insert (4), which is formed and can be positioned in the filter holder (2) for diverting the coffee emerging from the filter holder (2) via the filter openings (5) of the filter insert (3),
wherein the diverter insert (4) comprises or consists of a thermally insulating material,
wherein the thermal conductivity of the diverter insert (4) is < 0.3 W/(m^{∗}K) and the specific heat capacity of the diverter insert (4) is < 1200 J/(kg^{∗}K),
**characterized in that**
the distributor (11) comprises or consists of a thermally insulating material, the mass of the diverter insert (4) < is 5 g and the heat capacity of the diverter insert (4) < is 5 J/K.

2. The filter holder assembly (1) according to the preceding claim
***characterized in that***
the diverter insert (4) can be inserted into the filter holder (2) between the inner wall (2a) of the filter holder (2) on the one hand and the filter insert (3) on the other hand, preferably between the inner wall (2a) of the outlet region (7) of the filter holder (2) on the one hand and a section of the filter insert (3) comprising the filter openings (5) of the filter insert (3), in particular the base (6), on the other hand.

3. The filter holder assembly (1) according to any one of the preceding claims
***characterized in that***
the diverter insert (4) is shaped and can be positioned in the filter holder (2) in such a way that, when the diverter insert (4) is inserted in the filter holder, the coffee emerging via the filter openings (5) of the filter insert (3) can be diverted out of the filter holder (2) by means of the diverter insert (4) without this coffee touching the inner wall (2a) of the filter holder (2).

4. The filter holder assembly (1) according to any one of the preceding claims
***characterized in that***
the diverter insert (4) is provided with one or more spacer(s), in particular with a plurality of rib-shaped and/or point-shaped elevations, on that surface of the diverter insert (4) which faces the inner wall (2a) of the outlet region (7) of the filter holder (2) when inserted into the filter holder (2).

5. The filter holder assembly (1) according to any one of the preceding claims
***characterized in that***
the filter insert (3) is shaped and insertable into the filter holder (2) in such a way that, in the inserted state, a gap (9) is formed between at least sections (8) of that surface of the filter insert (3) which faces the inner wall (2a) of the filter holder (2), on the one hand, and the inner wall (2a) of the filter holder (2), on the other hand.

6. A filter holder coffee machine comprising a filter holder assembly (1) according to any one of the preceding claims.

7. Diverter insert (4) for insertion into a filter holder (2) for a filter holder coffee machine,
wherein the diverter insert (4) is shaped to be positioned in the filter holder (2) and to divert coffee passing out of the filter holder (2) via the filter openings (5) of a filter insert (3) inserted in the filter holder (2),
wherein the diverter insert (4) comprises or consists of a thermally insulating material, and
wherein the thermal conductivity of the diverter insert (4) is < 0.3 W/(m^{∗}K) and the specific heat capacity of the diverter insert (4) is < 1200 J/(kg^{∗}K),
**characterized in that**
the mass of the diverter insert (4) < is 5 g and the heat capacity of the diverter insert (4) < is 5 J/K.

## Revendications

1. Ensemble porte-filtre (1) pour une machine à café à porte-filtre avec
un porte-filtre (2) et un insert de filtre (3) pouvant être inséré dans le porte-filtre (2), dans lequel le porte-filtre (2) présente un distributeur (11) disposé en dessous de sa zone de sortie (7), par conséquent un disposé sur le côté qui est opposé à son ouverture (10) réalisée pour l'insertion de l'insert de filtre (3), et
un insert d'évacuation (4) qui est formé et peut être positionné dans le porte-filtre (2) pour évacuer du porte-filtre (2) le café sortant par les ouvertures de filtre (5) de l'insert de filtre (3),
dans lequel l'insert d'évacuation (4) contient un matériau thermiquement isolant ou en est constitué,
dans lequel la conductivité thermique de l'insert d'évacuation (4) est < 0,3 W/(m^{∗}K) et la capacité thermique spécifique de l'insert d'évacuation (4) est < 1 200 J/(kg^{∗}K),
**caractérisé en ce que**
le distributeur (11) contient un matériau thermiquement isolant ou en est constitué, la masse de l'insert d'évacuation (4) est < 5 g et la capacité thermique de l'insert d'évacuation (4) est < 5 J/K.

2. Ensemble porte-filtre (1) selon la revendication précédente
***caractérisé en ce que***
l'insert d'évacuation (4) peut être inséré dans le porte-filtre (2) entre la paroi intérieure (2a) du porte-filtre (2) d'une part et l'insert de filtre (3) d'autre part, de préférence entre la paroi intérieure (2a) de la zone de sortie (7) du porte-filtre (2) d'une part et une section, en particulier le fond (6), de l'insert de filtre (3) comprenant les ouvertures de filtre (5) de l'insert de filtre (3) d'autre part.

3. Ensemble porte-filtre (1) selon l'une quelconque des revendications précédentes,
***caractérisé en ce que***
l'insert d'évacuation (4) est formé et peut être positionné dans le porte-filtre (2) de telle sorte que le café sortant par les ouvertures de filtre (5) de l'insert de filtre (3), lorsque l'insert d'évacuation (4) est inséré dans le porte-filtre, peut être évacué du porte-filtre (2) avec ce dernier, sans que ce café touche la paroi intérieure (2a) du porte-filtre (2).

4. Ensemble porte-filtre (1) selon l'une quelconque des revendications précédentes,
***caractérisé en ce que***
l'insert d'évacuation (4) est pourvu, sur celle de ses surfaces qui, à l'état inséré dans le porte-filtre (2), est tournée vers la paroi intérieure (2a) de la zone de sortie (7) du porte-filtre (2), d'une ou de plusieurs entretoise(s), en particulier de plusieurs saillies en forme de nervures et/ou de points.

5. Ensemble porte-filtre (1) selon l'une quelconque des revendications précédentes,
***caractérisé en ce que***
l'insert de filtre (3) est formé et peut être inséré dans le porte-filtre (2) de telle sorte qu'à l'état inséré, une fente (9) est réalisée entre au moins des sections (8) de la surface de l'insert de filtre (3) qui est tournée vers la paroi intérieure (2a) du porte-filtre (2), d'une part, et la paroi intérieure (2a) du porte-filtre (2), d'autre part.

6. Machine à café à porte-filtre avec un ensemble porte-filtre (1) selon l'une quelconque des revendications précédentes.

7. Insert d'évacuation (4) destiné à être inséré dans un porte-filtre (2) pour une machine à café à porte-filtre,
dans lequel l'insert d'évacuation (4) est formé pour être positionné dans le porte-filtre (2) et pour évacuer du porte-filtre (2) le café sortant par les ouvertures de filtre (5) d'un insert de filtre (3) inséré dans le porte-filtre (2),
dans lequel l'insert d'évacuation (4) contient un matériau thermiquement isolant ou en est constitué, et
dans lequel la conductivité thermique de l'insert d'évacuation (4) est < 0,3 W/(m^{∗}K) et la capacité thermique spécifique de l'insert d'évacuation (4) est < 1 200 J/(kg^{∗}K),
**caractérisé en ce que**
la masse de l'insert d'évacuation (4) est < 5 g et la capacité thermique de l'insert d'évacuation (4) est < 5 J/K.
